# EUROPÄISCHE PATENTSCHRIFT

(11) **EP 0 529 564 B1**
(45) Veröffentlichungstag und Bekanntmachung des Hinweises auf die Patenterteilung: **09.08.1995**
(21) Anmeldenummer: 92114406.9
(22) Anmeldetag: 24.08.1992
(51) Int. Cl.: B63H 21/17, B63H 20/14

(54) **Antriebsbaugruppe für kleinere Wasserfahrzeuge**
Propulsion unit for small watercraft
Dispositif de propulsion pour des petits bateaux

(30) Priorität: 25.08.1991 DE 4127940
(43) Veröffentlichungstag der Anmeldung: 03.03.1993
(73) Patentinhaber: Schottel-Werft Josef Becker GmbH & Co KG., D-56322 Spay (DE)
(72) Erfinder: Lais, Siegfried, Dipl.-Ing. FH, W-5401 Spay (DE); Krautkrämer, Gerd, Ing., W-5407 Boppard (DE); Huth, Stefan, Dipl.-Ing., W-5407 Boppard 4 (DE); Schneider, Stephan, Dipl.-Ing.FH, W-5400 Koblenz (DE)
(74) Vertreter: Walter, Helmut, Dipl.-Ing.

(56) Entgegenhaltungen:
- CH-A- 637 584
- FR-A- 787 656
- FR-A- 2 484 356
- US-A- 4 578 049

## Beschreibung

Die Erfindung bezieht sich auf eine Antriebsbaugruppe für kleinere Wasserfahrzeuge.

Aufgabe der Erfindung ist es, eine solche Baugruppe so auszubilden, daß sie in extremem Maße emissionsarm ist, um zum Antrieb kleinerer Schiffe in besonders sensiblen Bereichen dienen zu können, beispielsweise zum Antrieb von Booten, die bei der Inspektion von Trinkwasserreservoiren zum Einsatz kommen. Die gesamte Antriebsbaugruppe soll unabhängig vom Wasserfahrzeug herstellbar und einem Wasserfahrzeug einfach zuzuordnen sein, wartungsarm und, im Interesse der geringen Umweltbelastung, öl- und fettfrei arbeiten können.

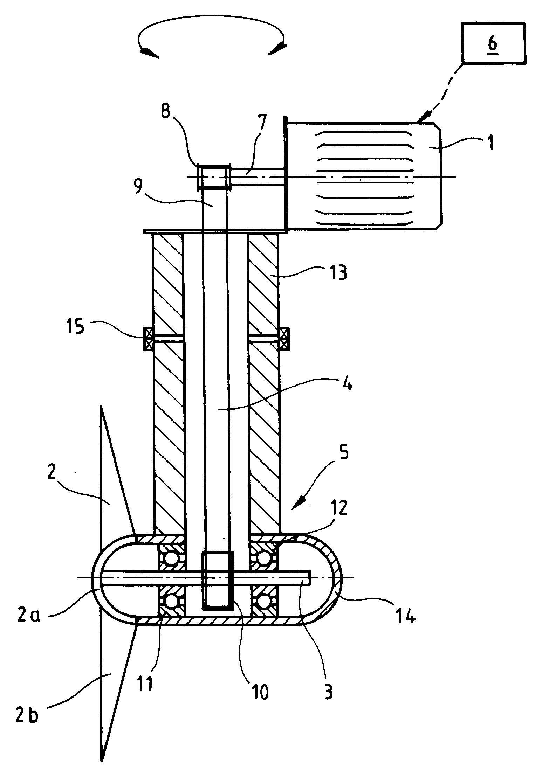

Die Merkmale der erfindungsgemäßen Baugruppe ergeben sich aus den Patentansprüchen. Sie ist nachfolgend anhand der Zeichnung beschrieben.

Wesentliche Teile der Antriebsbaugruppe sind ein Elektromotor 1, der von dem Elektromotor 1 angegriebene Propeller 2, ein die Antriebskraft vom Motor 1 auf die Propellerwelle 3 übertragender Zahnriementrieb 4 sowie das die vorgenannten Teile zusammenhaltende Gehäuse 5.

Die Energie für den Elektromotor 1 wird mittels einer photovoltaischen Einrichtung 6 gewonnen, die als schematischer Systembaustein dargestellt ist.

Auf der Abtriebswelle 7 des Elektromotors 1 sitzt drehfest eine Zahnriemenscheibe 8, die über den Zahnriemen 9 mit einer entsprechenden Zahnriemenscheibe 10 gekuppelt ist, die ihrerseits drehfest auf der Propellerwelle 3 sitzt. Die Propellerwelle 3 ist mittels zweier Lager 11,12 drehbar gelagert, die in Richtung der Längsachse der Propellerwelle 3 gegeneinander versetzt und beiderseits der Zahnriemenscheibe 10 angeordnet sind.

Der Zahnriemen 9 ist in das motorseitige, offene Ende eines zylindrischen Unterwasserteilgehäuses 13 eingeführt und in diesem Unterwasserteilgehäuse 13 zu der propellerwellenseitigen Zahnriemenscheibe 10 geführt. Der Abschluß des zylindrischen Unterwasserteilgehäuses 13 am propellerseitigen Ende erfolgt durch ein die Propellerwelle 3 und deren Lager 11,12 aufnehmendes Teilgehäuse 14, das wasserdicht an das zylindrische Teilgehäuse 13 angeschlossen und selbst wasserdicht ist und aus dem am einen Ende, wiederum wasserdicht, die Propellerwelle 3 herausgeführt ist, um außerhalb des Gehäuses den Propeller 2 zu tragen, der im Wesentlichen aus einer Wasserdicht am Teilgehäuse 14 anliegenden Nabe 2a und aufgesetzten Propellerflügeln 2b besteht.

Die Lager 11,12 der Propellerwelle 3 sind spezielle trockenlaufende Edelstahl- oder Kunststoffwälzlager, die außer schmierstoffauch wartungsfrei sind. Insoweit ergeben sich beim Einsatz keinerlei Emissionen, der Antrieb ist umweltneutral.

Als Werkstoff für die beiden Teilgehäuse 13,14 wird ein thermoplastisches Acetalcopolymerisat vorgeschlagen, das die folgenden Kriterien erfüllt
- physiologisch unbedenklich
- korrosionsbeständig
- geringe Dichte bei hoher Materialfestigkeit
- unabhängig von der Einsatzdauer frei gegen Algen- und Muschelbewuchs
- absolut frei von elektrolytischer Korrosion
- hoher akustischer Dämpfungsgrad
Der Einbau der erfindungsgemäßen Antriebsbaugruppe in ein Wasserfahrzeug ist mit vertikaler Längsachse des zylindrischen Teilgehäuses 13 gedacht, das in einem ausgewählten Bereich den Boden des Wasserfahrzeugs durchstößt und in diesem Bereich mit einem Lager 15 versehen ist, das den Gehäusedurchtritt durch den Wasserfahrzeugboden wasserdicht und so gestattet, daß die gesamte Baugruppe um die Längsachse des zylindrischen Teilgehäuses 13 (rundum) ohne einen Anschlag eingeschränkt steuerbar ist und dadurch uneingeschränkt den vollen Schub in jeder gewünschten Steuerposition abgibt. Der Abschnitt des zylindrischen Teilgehäuses 13 unterhalb des Lagers 15 mit dem Teilgehäuse 14 und dem Propeller 2 befindet sich im Einbauzustand außenbords, der Teil der Antriebsbaugruppe oberhalb des Lagers 15 befindet sich innenbords.

Durch Reibungsoptimierung der Walzpaarung des Riementriebs, die Lagerung der Propellerwelle in Wälzlagern und eine schuboptimierte Auslegung des Propellers ergibt sich trotz Öl- und Fettfreiheit ein hoher mechanischer Wirkungsgrad der Kraftübertragung. Diese Optimierung des mechanischen Wirkungsgrades macht es möglich, die zur Verfügung stehende Sonnenenergie in ausreichende Fahrleistung umzusetzen.
Bedingt durch die photovoltaische Energieversorgung, den Einsatz eines Elektromotors als Antriebsmaschine und den konstruktiven Aufbau des Antriebes gewährleistet das Antriebssystem ein extrem geräuscharmes Betriebsverhalten, welches besonders in der Freizeitanwendung dem Erholungssuchenden selbst, sowie der schützenswerten Umwelt, also dem Erholungsgebiet, zugute kommen. Der konstruktive Aufbau der erfindungsgemäßen Antriebsbaugruppe zeichnet sich aus durch
- hohen Dämpfungsgrad des Gehäuses durch Kunststoffeinsatz,
- wirkungsgradoptimierten Riementrieb,
- keine ineinandergreifenden Verzahnungsteile,
- schuboptimierten Propeller,
- optimale Lagerung,
- Reduzierung der rotierenden Bauteile auf ein Minimum.

In Verbindung mit einem Elektromotor als Antriebsmaschine und im besonderen mit der photovoltaischen Energieversorgung bildet der Antrieb ein emissionsfreies, ökologisch vollständig vertretbares Gesamtsystem.

Durch seine Wirkungsgradoptimierung ist der Antrieb besonders geeignet für die solare Energieversorgung (gute Fahrleistungen trotz niedriger eingestrahlter Energiedichte), bei konventioneller Energieversorgung durch das Netz wirkt er sich ressourcenschonend aus.

## Patentansprüche

1. Antriebsbaugruppe für kleinere Wasserfahrzeuge, **gekennzeichnet** durch ein zylindrisches Unterwasserteilgehäuse (5), das am einen Ende einen photovoltaisch zu betreibenden Elektromotor trägt (1), dem am anderen Ende ein Propeller (2) in der Weise zugeordnet ist, daß er auf einer Welle (3) sitzt, die in paralleler Anordnung zur Motorabtriebswelle (7) in einem mit dem zylindrischen Unterwasserteilgehäuse (5) verbundenen Teilgehäuse (14) in schmierungsfreien Lagern (11,12) drehbar gelagert ist, wobei zwischen Motorabtriebswelle (7) und Propellerwelle (3) ein Zahnriementrieb (4) eingeschaltet ist, dessen Zahnriemen in das motorseitige, offene Ende des zylindrischen Unterwasserteilgehäuses (5) eingeführt und durch das zylindrische Unterwasserteilgehäuse hindurch zur Motorwelle (7) geführt ist, wobei diese gesamte Baugruppe Lager- und die Schiffswand dichtend durchdringende Mittel (15) aufweist, mit denen die Baugruppe in ihrer Gesamtheit um die Längsachse des zylindrischen Teilgehäuses ohne Nutzung eines Anschlags zur Begrenzung der Drehbewegung rundum drehbar im Wasserfahrzeug derart lagerbar ist, daß sich die Baugruppe mit Ausnahme des Propellers (2), des seine Welle aufnehmenden Teilgehäuses (14) und eines propellerseitigen Abschnitts des zylindrischen Unterwasserteilgehäuses (5) innenbords anzuordnen ist.

2. Antriebsbaugruppe nach Anspruch 1, **dadurch gekennzeichnet**, daß die Lager (11,12) der Propellerwelle (3) Edelstahlwälzlager sind.

3. Antriebsbaugruppe nach Anspruch 1, **dadurch gekennzeichnet**, daß die Lager (11,12) der Propellerwelle (3) Kunststoffwälzlager sind.

4. Antriebsbaugruppe nach einem der Ansprüche 1 bis 3, **dadurch gekennzeichnet**, daß das zylindrische Unterwasserteilgehäuse (5) und das die Propellerwelle aufnehmende Teilgehäuse (14) eine insgesamt wasserdichte, lediglich am oberen Ende des zylindrischen Unterwasserteilgehäuses offene Einheit bilden, aus der am einen Ende des die Propellerwelle aufnehmenden Teilgehäuses (14) die Propellerwelle (3) drehbar und wasserdicht herausgeführt ist.

5. Antriebsbaugruppe nach einem der Ansprüche 1 bis 4, **dadurch gekennzeichnet**, daß sowohl das zylindrische Unterwasserteilgehäuse (5) als auch das die Propellerwelle aufnehmende Teilgehäuse (14) aus Kunststoff bestehen.

## Claims

1. A propulsion unit assembly for smaller water-borne vessels, characterised by a cylindrical underwater sub-housing (5), carrying a photovoltaically operated electric motor at one end and having at the other end a propeller (2) so disposed as to be mounted on a shaft (3) mounted rotatably in non-lubricated bearings (11, 12) in a parallel arrangement to the motor output shaft (7) in a sub-housing (14) connected to the cylindrical underwater sub-housing (5), a toothed belt drive (4) being interposed between the motor output shaft (7) and the propeller shaft (3), the toothed belt being introduced into the open end of the cylindrical underwater sub-housing (5) on the motor side and being taken through the cylindrical underwater sub-housing (5) as far as the motor shaft (7), this entire assembly comprising bearing means and means (15) sealingly penetrating the vessel wall, by which means (15) the entire assembly can be so mounted in the vessel for rotation about the longitudinal axis of the cylindrical sub-housing without using an abutment to limit the rotary movement, that the assembly except for the propeller (2), its sub-housing (14) accommodating its shaft, and a portion of the cylindrical underwater sub-housing (5) on the propeller side, can be disposed inboard.

2. A propulsion unit assembly according to claim 1, characterised in that the bearings (11, 12) of the propeller shaft (3) are high-grade steel rolling bearings.

3. A propulsion unit assembly according to claim 1, characterised in that the bearings (11, 12) of the propeller shaft (3) are plastic rolling bearings.

4. A propulsion unit assembly according to any one of claims 1 to 3, characterised in that the cylindrical underwater sub-housing (5) and the sub-housing (14) accommodating the propeller shaft form a complete water-tight unit open only at the top end of the cylindrical underwater sub-housing, from which unit the propeller shaft (3) is taken out rotatably and so as to be water-tight at one end of the sub-housing (14) receiving the propeller shaft.

5. A propulsion unit assembly according to any one of claims 1 to 4, characterised in that both the cylindrical underwater sub-housing (5) and the sub-housing (14) accommodating the propeller shaft consist of plastics.

## Revendications

1. Groupe motopropulseur pour bateaux de petite taille, caractérisé par un carter partiel cylindrique immergé (5) qui porte, à l'une de ses extrémités, un moteur électrique à actionnement photovoltaïque (1) auquel est associée, à l'autre extrémité, une hélice (2), de façon que ladite hélice soit disposée sur un arbre (3) qui est monté rotatif dans des paliers sans graissage (11, 12), parallèlement à l'arbre de sortie (7) du moteur, dans un carter partiel (14) relié au carter partiel cylindrique immergé (5), entre l'arbre de sortie (7) du moteur et l'arbre (3) de l'hélice étant intercalé un dispositif d'entraînement à courroie crantée (4) dont la courroie crantée pénètre dans l'extrémité ouverte côté moteur du carter partiel cylindrique immergé (5) et le traverse pour rejoindre l'arbre (7) du moteur, l'ensemble du groupe comportant des moyens de support et des moyens (15) qui traversent la paroi du bateau de manière étanche et qui supportent le groupe dans sa totalité avec possibilité de rotation autour de l'axe longitudinal du carter partiel cylindrique sans utiliser de butée pour en limiter le mouvement tournant, ce qui permet d'installer le groupe à bord, à l'exception de l'hélice (2), du carter partiel (14) dans lequel est logé l'arbre de l'hélice et d'une partie côté hélice du carter partiel cylindrique immergé (5).

2. Groupe motopropulseur selon la revendication 1, caractérisé en ce que les paliers (11, 12) de l'arbre (3) de l'hélice sont des roulements en acier fin.

3. Groupe motopropulseur selon la revendication 1, caractérisé en ce que les paliers (11, 12) de l'arbre (3) de l'hélice sont des roulements en matière synthétique.

4. Groupe motopropulseur selon l'une des revendications 1 à 3, caractérisé en ce que le carter partiel cylindrique immergé (5) et le carter partiel (14) dans lequel est logé l'arbre de l'hélice forment une unité globalement étanche qui n'est ouverte qu'à l'extrémité supérieure du carter partiel cylindrique immergé, et d'où l'arbre (3) de l'hélice sort de manière rotative et étanche à l'une des extrémités du carter partiel (14) dans lequel il est logé.

5. Groupe motopropulseur selon l'une des revendications 1 à 4, caractérisé en ce que aussi bien le carter partiel cylindrique immergé (5) que le carter partiel (14) dans lequel est logé l'arbre de l'hélice sont réalisés en matière synthétique.
